# EUROPÄISCHE PATENTSCHRIFT

(11) **EP 2 741 860 B1**
(45) Veröffentlichungstag und Bekanntmachung des Hinweises auf die Patenterteilung: **05.10.2016**
(21) Anmeldenummer: 12750557.6
(22) Anmeldetag: 06.08.2012
(51) Int. Cl.: B05B 1/30, B05B 15/02, B05B 12/00, G01F 1/58, B05B 1/20

(54) **ABSCHALTVENTIL FÜR EINE FLUIDFÜHRENDE VORRICHTUNG EINES NUTZFAHRZEUGS**
SHUT-OFF VALVE FOR A FLUID CONDUCTING SYSTEM MOUNTED ON A VEHICLE
VANNE ON-OFF POUR UN DISPOSITIF D'AMENAGE DE FLUIDE MONTÉ SUR VÉHICULE

(30) Priorität: 12.08.2011 DE 102011110950
(43) Veröffentlichungstag der Anmeldung: 18.06.2014
(73) Patentinhaber: Altek Ges. Für Allgem. Landtechnik MbH, 72108 Rottenburg-Hailfingen (DE)
(72) Erfinder: MUELLER, Norbert, 70499 Stuttgart (DE)
(74) Vertreter: Witte, Weller & Partner Patentanwälte mbB
(86) Internationale Anmeldenummer: PCT/EP2012/065330
(87) Internationale Veröffentlichungsnummer: WO 2013/023947

(56) Entgegenhaltungen:
- DE-A1- 4 445 591
- DE-B4-102004 011 737
- FR-A1- 2 508 823
- FR-A1- 2 957 277

## Beschreibung

Die Erfindung betrifft ein Abschaltventil für eine fluidführende Vorrichtung eines Nutzfahrzeugs zur Unterbrechung und/oder Freigabe eines Fluidflusses eines Fluids zwischen einer Versorgungsleitung und einer Spritzdüse.

Ein solches Ventil ist aus DE 10 2004 011 737 B4 bekannt.

Bei bekannten Nutzfahrzeugen werden fluidführende Vorrichtungen eingesetzt, um Flüssigkeiten großflächig zu verspritzen, wie beispielsweise Spritzmittel im Landwirtschaftsbereich oder Enteisungsmittel im Flughafenbereich. Die Nutzfahrzeuge weisen hierzu typischerweise Ausleger auf, an denen Spritzdüsen zum Verspritzen der Flüssigkeit angeordnet sind. Die fluidführende Vorrichtung weist zur Versorgung der Spritzdüsen mit dem Fluid einen Fluidtank, Versorgungsleitungen, Pumpen, Drosseln und Fluidhähne auf. Einer oder mehrerer der Spritzdüsen ist ein Abschaltventil zugeordnet, welches einen Fluidfluss von einer Versorgungsleitung zu den Spritzdüsen wahlweise unterbricht oder freigibt.

Typischerweise wird eine Vielzahl an Spritzdüsen eingesetzt, was dazu führt, dass sehr hohe elektrische Energiemengen benötigt werden, um die entsprechende Anzahl an Abschaltventilen zu steuern. Es ist notwendig, dass die Abschaltventile energieökonomisch arbeiten, um ein Bordnetz des Nutzfahrzeugs nicht zu überlasten.

Die eingangs genannte DE 10 2004 011 737 B4 beschreibt ein Abschaltventil für Pflanzenschutzsprühvorrichtungen, das ein Zulaufrohr und ein Ablaufrohr aufweist. Das Zulaufrohr und das Ablaufrohr sind konzentrisch zueinander angeordnet. Eine fluidtechnische Verbindung zwischen dem Zulaufrohr und dem Ablaufrohr kann durch einen Schließstößel geöffnet oder geschlossen werden. Hierdurch wird eine besonders einfache und sichere Abschaltventilkonstruktion erreicht. Eine Messvorrichtung zum Erfassen eines Fluidflusses wird davon nicht berührt.

Um sicherzugehen, dass das Fluid wie gewünscht aus den Spritzdüsen austritt, wird typischerweise eine Sichtkontrolle eines Benutzers des Nutzfahrzeugs durchgeführt. Dieser schaut während des Betriebs zu den Spritzdüsen und überprüft so, ob diese das Fluid tatsächlich abgeben. Da viele Konstruktionen von Nutzfahrzeugen die Spritzdüsen im Heckbereich des Nutzfahrzeugs haben, hat dies zur Folge, dass sich der Benutzer zum Überprüfen der Spritzdüsen drehen muss. Das führt zu einer unkomfortablen und unsicheren Überprüfung des korrekten Spritzens. Insbesondere bei Nachteinsätzen kann auf diese Weise nur schwer gesichert werden, dass das Fluid korrekt aus den Spritzdüsen austritt. Ist dies nicht gewährleistet, kann es zu einem fehlerhaften Aufbringen des Fluids auf den Boden kommen. Beispielsweise kann dies im landwirtschaftlichen Einsatz zu einem fehlerhaften Düngen und im Flughafenbetrieb zu einem fehlerhaften Enteisen der Landebahnen führen.

DE 20 2009 004 872 U1 beschreibt ein Spritzgerät mit mindestens einem Spritzdüsenelement. Dieses weist eine Spritzdüse zum Aufbringen einer Flüssigkeit auf. Es ist vorgesehen, dass unmittelbar an der Spritzdüse, im Nahbereich der Spritzdüse, in der Spritzdüse und/oder an dem Spritzdüsenelement ein Leuchtmittel angeordnet ist, das den Sprühstrahl anstrahlt. Hierdurch wird es ermöglicht, dass der Benutzer des Nutzfahrzeugs eine Sichtkontrolle auch bei Nachteinsätzen durchführen kann.

Nachteilig hierbei ist es, dass weiterhin eine unkomfortable und unsichere Sichtkontrolle der Spritzdüsen durch den Benutzer erfolgen muss.

Die FR 2 508 823 A1 zeigt ein weiteres Beispiel für einen Abschaltventil für landwirtschaftlich genutzte Feldspritzen gemäß dem Oberbegriff des Anspruchs 1. Das darin gezeigte Abschaltventil ist dazu ausgelegt, den Volumenstrom des zu verteilenden Fluids entsprechend der Geschwindigkeit des Zugfahrzeugs anzupassen, um eine möglichst gleichmäßige Verteilung des Fluids auf der Ackerfläche zu gewährleisten.

Aus der DE 44 45 591 A1 ist ferner ein magnetisch-induktives Durchflussmessgerät für strömende Medien bekannt.

Es ist daher eine Aufgabe der Erfindung, ein Abschaltventil bereitzustellen, das eine sichere und stetige Kontrolle des Fluidflusses durch das Abschaltventil ermöglicht.

Diese Aufgabe wird durch das Abschaltventil der eingangs genannten Art gemäß Anspruch 1 gelöst mit einer Messvorrichtung zum Erfassen des Fluidflusses, wobei die Messvorrichtung mindestens ein erstes Magnetelement und ein zweites Magnetelement zum Erzeugen eines gemeinsamen Magnetfelds aufweist, wobei die Magnetelemente derart angeordnet sind, dass das Fluid zumindest teilweise durch das Magnetfeld fließen kann, und wobei die Messvorrichtung mindestens einen Sensor aufweist, der eine Ladungsverschiebung geladener Teilchen in dem Fluid erfassen und der ein Messsignal in Abhängigkeit der Ladungsverschiebung ausgeben kann, gekennzeichnet durch eine Zuflussleitung, die als eine erste Rohrleitung ausgebildet ist, und eine Abflussleitung, die als eine zweite Rohrleitung ausgebildet ist, wobei die erste und die zweite Rohrleitung konzentrisch zueinander angeordnet sind und wobei mindestens eines der Magnetelemente an einer der Rohrleitungen angeordnet ist.

Die Erfindung basiert somit auf der Idee, eine Messvorrichtung innerhalb des Abschaltventils einzusetzen, das ein Messsignal in Abhängigkeit des Fluidflusses erzeugen kann. Das Messsignal kann anschließend für eine Weiterverarbeitung und/oder eine Darstellung für einen Benutzer an eine entsprechende Vorrichtung ausgegeben werden.

Die Messvorrichtung basiert auf dem Prinzip, dass ein Magnetfeld erzeugt wird, welches, bezogen auf mindestens einen Teil der Magnetfeldlinien, quer oder vorzugsweise orthogonal zu einer Strömungsrichtung des Fluids verläuft. Liegt ein Fluidfluss durch das Magnetfeld vor, werden geladene Teilchen in dem Fluid, wie Elektronen und Ionen, aufgrund der Lorenzkraft abgelenkt. Durch Anordnung des Sensors in einem Bereich, in den die geladenen Teilchen bei Fluidfluss gedrängt werden, kann eine Ladungsverschiebung innerhalb der Flüssigkeit erfasst werden.

Bevorzugt sind die Magnetelemente zwei voneinander getrennte Magnetelemente. Die Magnetelemente sind derart zueinander angeordnet, dass ein Südpol des einen Magnetelements auf einen Nordpol des anderen Magnetelements ausgerichtet ist. Weiter ist es bevorzugt, wenn mindestens eines der Magnetelemente ein Permanentmagnet ist. Besonders bevorzugt ist es, wenn beide Magnetelemente Permanentmagnete sind. Permanentmagnete können ohne elektrische Versorgungsleitungen in das Abschaltventil integriert werden, woraus sich konstruktive Vorteile gegenüber Elektromagneten ergeben. Zudem wird kein zusätzlicher elektrischer Versorgungsstrom für die Magnetelemente benötigt. Vorzugsweise weist der Permanentmagnet Neodym auf, das auch bei sehr kleinen Magneten zu starken Magnetfeldern von bis zu etwa 100 mTesla führt. Hierdurch können die Magnetelemente gegenüber herkömmlichen Magnetelementen verkleinert werden und es wird zusätzlich Bauraum eingespart.

Es ist zudem vorzugsweise vorgesehen, dass der Sensor ein induktiver Sensor ist, in den eine elektrische Spannung durch die geladenen Teilchen und den Fluidfluss induziert werden können. Der Sensor kann hierzu aus zwei Elektroden bestehen. Diese können derart angeordnet sein, dass sich der Fluidfluss zwischen den beiden Elektroden befindet. Besonders bevorzugt ist es, wenn eine gedachte Verbindungsachse zwischen den beiden Elektroden quer zu der Flussrichtung und quer zu den Magnetfeldlinien verläuft. Ferner ist es denkbar, dass der Sensor die Ladungsverschiebung kapazitiv erfasst.

Weiter ist es bevorzugt, wenn der Sensor gegenüber dem Fluid isoliert ist. Dies kann beispielsweise durch einen den Sensor umgebenden Isolator erfolgen, beispielsweise einen Kunststoffisolator oder eine entsprechende Beschichtung. Das Isolieren hat den Vorteil, dass der Sensor vor aggressiven Fluiden geschützt wird und somit eine Beschädigung durch Abrasion oder Korrosion und eine Beeinflussung durch Sedimentierung verhindert werden. Somit wird ein dauerhaft korrekter Betrieb des Sensors gewährleistet.

Ein besonderer Vorteil dieser Messvorrichtung ist es, dass sie mit keinen oder nur sehr geringen elektrischen Versorgungsströmen betrieben werden kann. Hierdurch wird gewährleistet, dass auch bei der Verwendung einer Vielzahl an Abschaltventilen insgesamt keine oder nur geringe zusätzliche Versorgungsströme für die Messvorrichtungen erforderlich sind. Eine Überlastung eines Bordnetzes des Nutzfahrzeugs wird somit sehr gut entgegengewirkt. Zudem ergibt sich der Vorteil, dass die Messvorrichtung keine bewegten Teile aufweist, wie dies typischerweise bei Durchflussmessvorrichtungen der Fall ist. Hierdurch wird Bauraum eingespart, welcher in herkömmlichen Abschaltventilen nur sehr gering ist. Gleichzeitig wird eine Robustheit erhöht und eine Fehleranfälligkeit minimiert.

Insgesamt ermöglicht die Erfindung eine einfache und sichere Überwachung des Fluidflusses durch das Abschaltventil und somit an den Spritzdüsen. Gleichzeitig wird die begrenzte Versorgungsenergie für Abschaltventile und der begrenzte Bauraum sehr gut ausgenutzt.

Somit ist die Aufgabe vollständig gelöst.

In einer Ausgestaltung der Erfindung weist das Abschaltventil eine Auswerteeinheit auf, die mit dem Sensor signaltechnisch verbunden ist und die dazu ausgebildet ist, das Messsignal zu erfassen, ein Ausgangssignal in Abhängigkeit des Messsignals zu erzeugen und das Ausgangssignal an eine Ausgabeeinheit auszugeben.

In dieser Ausgestaltung kann die Messvorrichtung ein Messsignal erzeugen, das von der Auswerteeinheit empfangen werden kann. Diese kann dann in Abhängigkeit des Messsignals ein Ausgangssignal bereitstellen. Das Ausgangssignal wird anschließend zur Darstellung an eine Ausgabeeinheit weitergeleitet.

Das Messsignal ist typischerweise eine elektrische Spannung im Mikrovoltbereich. Daher ist es bevorzugt, wenn die Auswerteeinheit das Messsignal verstärkt. Das Ausgangssignal kann als ein elektrisches Signal mit zwei verschiedenen Zuständen gebildet werden. Es kann beispielsweise dann einen hohen Wert annehmen, wenn der Fluidfluss an dem Sensor erkannt wird. Dieser hohe Wert kann anschließend für den Benutzer durch die Ausgabeeinheit visualisiert werden. Hierzu ist es denkbar, dass die Auswerteeinheit einen Operationsverstärker, einen A/D-Wandler und/oder einen Mikrocontroller aufweist. Die Auswerteeinheit kann beispielsweise ab einem bestimmten Schwellwert für das Messsignal den hohen Wert für das Ausgangssignal erzeugen. Dieses Ausgangssignal kann dann direkt an die Ausgabeeinheit oder beispielsweise über eine Ventilelektronik und eine Schnittstelle des Abschaltventils weitergeleitet werden. Bevorzugt ist es, wenn diese Schnittstelle über einen Daten-Bus mit einer Bordelektronik des Nutzfahrzeugs signaltechnisch verbunden ist.

Einzelne elektrische Bauelemente der Auswerteeinheit können auf einer flexiblen Leiterplatte, wie einer Polyimid-Platte, angeordnet sein, die Teil der Auswerteeinheit ist. Dies hat den Vorteil, dass die Auswerteeinheit auch in geringen und gekrümmten Bauräumen angeordnet werden kann. Besonders bevorzugt ist es, wenn die Auswerteeinheit in Bauteile des Abschaltventils eingegossen ist. Somit ist die Auswerteeinheit vor Feuchtigkeit und Schmutz geschützt. Zudem wird weiterer Bauraum eingespart.

Die Ausgabeeinheit ist vorzugsweise derart angeordnet, dass ein Benutzer des Nutzfahrzeugs sehr einfach und schnell Informationen über den Fluidfluss von der Ausgabeeinheit ablesen kann. Als Ausgabeeinheit ist beispielsweise ein Bildschirm denkbar, der dem Benutzer zumindest einen Status des Fluidflusses durch das Abschaltventil, vorzugsweise durch eine Vielzahl von Abschaltventilen, anzeigen kann. Vorzugsweise ist es vorgesehen, dass die Ausgabeeinheit innerhalb eines Fahrerraums des Nutzfahrzeugs angeordnet ist, so dass der Benutzer einen korrekten Betrieb schnell und sicher überprüfen kann. Beispielsweise kann es vorgesehen sein, dass das Abschaltventil über den Daten-Bus mit der Bordelektronik des Nutzfahrzeugs verbunden ist, so dass bereits im Nutzfahrzeug vorhandene Ausgabeeinheiten zur Anzeige des Fluidflusses eingesetzt werden können. Dieser Daten-Bus kann beispielsweise ein CAN-Bus sein.

Ferner ist es denkbar, dass mittels des Sensors eine Durchflussmenge des Fluids bestimmt wird, die durch das Abschaltventil fließt. Dies kann beispielsweise mit Hilfe von magnetisch induktiven Sensoren erfolgen. In diesem Fall ist die Höhe der elektrischen Spannung des Messsignals ein Maß für eine Fließgeschwindigkeit des Fluids. Bei bekanntem Durchflussquerschnitt kann die Durchflussmenge in Abhängigkeit des Durchflussquerschnitts und der elektrischen Spannung berechnet werden. Dies kann beispielsweise in der Auswerteinheit erfolgen, sodass als Ausgangssignal ein Wert für die Durchflussmenge ausgegeben wird. Alternativ kann auch ein Wert für die Fließgeschwindigkeit als Ausgangssignal ausgegeben werden. Dann ist es vorgesehen, dass die Durchflussmenge in einer zur Auswerteeinheit externen Berechnungseinheit bestimmt wird.

In einer Ausgestaltung der Erfindung weist das Abschaltventil eine Zuflussleitung auf, die als eine erste Rohrleitung ausgebildet ist, und eine Abflussleitung auf, die als eine zweite Rohrleitung ausgebildet ist, wobei die erste und die zweite Rohrleitung konzentrisch zueinander angeordnet sind und wobei eines der Magnetelemente an einer der Rohrleitungen angeordnet ist.

In dieser Ausgestaltung weist das Abschaltventil eine Zuflussleitung für das Fluid in Form einer ersten Rohrleitung auf. Zudem weist es eine Abflussleitung für das Fluid in Form einer zweiten Rohrleitung auf. Die Zuflussleitung und die Abflussleitung sind derart zueinander angeordnet, dass sich eine Innenleitung und eine die Innenleitung umgebende Ringleitung bildet, die entsprechend für den Abfluss oder den Zufluss eingesetzt werden kann.

Das Magnetfeld wird vorzugsweise derart erzeugt, dass es sich radial zu einer Längsachse der Rohrleitungen und durch ein Segment der Ringleitung hindurch erstreckt. Somit muss sich das Magnetfeld nicht durch den gesamten Querschnitt der jeweiligen Rohrleitung erstrecken, sondern es ist ausreichend, wenn es sich durch einen Teil des Querschnitts der Ringleitung erstreckt. Es ist ein Vorteil, dass ein Magnetfeld eingesetzt werden kann, welches eine relativ geringe Stärke und Erstreckung aufweist. Hierdurch können die Magnetelemente selbst sehr klein gehalten werden.

In dieser Ausgestaltung wird vorzugsweise eines der Magnetelemente von einer Wandung der inneren Rohrleitung gehalten. Das andere Magnetelement ist vorzugsweise an der äußeren Rohrleitung oder außerhalb der beiden Rohrleitungen angeordnet. Die Anordnung der Magnetelemente erfolgt bevorzugt radial zu der Längsachse der beiden Rohrleitungen, wobei die beiden Magnete in radialer Richtung übereinander stehen. Hierbei ergibt sich der Vorteil, dass der Sensor sehr einfach in einer geeigneten Position angeordnet werden kann.

Der Vorteil beim Einsatz der Ringleitung ist somit, dass nur ein kleiner Bereich des gesamten Fluidflusses erfasst werden und somit nur eine kurze Strecke von dem Magnetfeld durchdrungen werden muss. Somit kann die gesamte Messvorrichtung sehr klein ausgestaltet werden, wodurch weiterer Bauraum eingespart wird.

In einer weiteren Ausgestaltung ist mindestens eines der Magnetelemente zumindest teilweise innerhalb einer Wandung eines der Rohrleitungen angeordnet.

In dieser Ausgestaltung ist das Magnetelement in die entsprechende Rohrleitung integriert. Dies kann beispielsweise bei Kunststoffrohren durch ein Eingießen erfolgen. Ein Vorteil hierbei ist es, dass das Magnetelement stets sicher durch die Rohrleitung in seiner Position gehalten wird. Ein weiterer Vorteil ist es, dass das jeweilige Magnetelement durch die Rohrwandung selbst vor Abrasion, Korrosion und Sedimentierung aufgrund des Fluids geschützt ist. Zudem wird der Durchflussquerschnitt innerhalb des Abschaltventils nicht durch das Magnetelement beeinträchtigt.

Bei einem Eingießen des Magnetelements in eines der Rohrleitungen ist die Curie-Temperatur des entsprechenden Magnetelements zu berücksichtigen. Bei Kunststoffgießverfahren können Temperaturen eingesetzt werden, die zu einem Entmagnetisieren des eingegossenen Magnetelements führen können. In diesem Fall ist es vorgesehen, dass das entsprechende Magnetelement zunächst eingegossen wird und in einem anschließenden zusätzlichen Herstellungsschritt eine Remagnetisierung des Magnetelements innerhalb der Rohrleitung durchgeführt wird.

Zur Stabilisierung der Wandung kann die Rohrleitung aus Fasermatten gebildet oder durch sie verstärkt werden. Bevorzugt ist ein Spritzguss mit PPS.

In einer weiteren Ausgestaltung weist mindestens eines der Magnetelemente einen kreisringsegmentförmigen Querschnitt auf.

In dieser Ausgestaltung ist das Magnetelement insgesamt halbschalenförmig ausgebildet. Das Magnetelement kann beispielsweise die Form eines Zylindermantelsegments aufweisen, wobei es eine definierte Dicke besitzt. Vorteil hierbei ist es, dass das Magnetelement sehr einfach an der Rohrleitung angeordnet oder in die Rohrleitung integriert werden kann. Zudem ergibt sich daraus die vorteilhafte Möglichkeit, ein besonders homogenes Magnetfeld zu erzeugen, dass sich besonders weit in Umfangsrichtung um die Längsachse der Rohrleitung erstreckt. Somit kann eine besonders sichere Ablenkung geladener Teilchen gewährleistet werden.

In einer weiteren Ausbildung sind die Rohrleitungen über einen Schließstößel fluidtechnisch verbunden, wobei der Schließstößel die Unterbrechung und/oder die Freigabe des Fluidflusses bewirken kann.

In dieser Ausgestaltung ist das Abschaltventil derart ausgestaltet, dass die beiden konzentrischen Rohrleitungen in einem Endbereich über den Schließstößel fluidtechnisch miteinander verbunden oder unterbrochen werden können. Der Schließstößel wird hierzu vorzugsweise in Längsrichtung, also entlang der Längsachse der Rohrleitungen, bewegt.

Der Einsatz der Messvorrichtung in einem derartigen Abschaltventil hat den besonderen Vorteil, dass der Schließstößel ungehindert eingesetzt werden kann, welcher ein besonders sicheres Freigeben oder Unterbrechen ermöglicht. Der Schließstößel benötigt einen großen Teil des Bauraums innerhalb des Ventils und eine entsprechende Antriebsvorrichtung. Hier bietet die erfindungsgemäße Messvorrichtung den Vorteil, dass die Messung entfernt von dem Schließstößel stattfinden kann und somit vorhandene Schließstößelstrukturen sehr wirtschaftlich zusammen mit der Erfindung eingesetzt werden können.

In einer weiteren Ausgestaltung weist das Abschaltventil ein Außengehäuse und ein Stellmodul auf, wobei das Stellmodul die Rohrleitungen aufweist und lösbar mit dem Außengehäuse verbunden ist.

In dieser Ausgestaltung weist das Abschaltventil zumindest zwei Baugruppen auf, die lösbar miteinander verbunden sind. Eine Baugruppe ist das Außengehäuse. Vorzugsweise kann es das Stellmodul zumindest teilweise in sich aufnehmen. Die andere Baugruppe ist das Stellmodul, das vorzugsweise die erste und die zweite Rohrleitung, den Schließstößel und Antriebselemente für den Schließstößel aufweist.

Die zumindest zweiteilige Ausgestaltung des Abschaltventils hat den Vorteil, dass das Stellmodul sehr einfach aus dem Außengehäuse herausgenommen werden kann, beispielsweise zu Wartungszwecken. Sie ermöglicht eine einfache Fehlerdiagnose und Reparatur am Einsatzort des Nutzfahrzeugs, beispielsweise durch Sichten und Austauschen des Stellmoduls.

Diese Ausgestaltung hat den weiteren Vorteil, dass die Messvorrichtung und/oder die Auswerteeinheit zumindest teilweise in das Stellmodul integriert werden kann. Somit sind auch die Messvorrichtung oder zumindest Teile der Messvorrichtung mit dem Stellmodul austauschbar ausgebildet. Hierdurch ergeben sich sehr einfache Wartungs- und Reparaturarbeiten für das Abschaltventil.

In einer weiteren Ausgestaltung der Erfindung ist das erste Magnetelement in dem Außengehäuse angeordnet.

In dieser Ausgestaltung ist die Messvorrichtung teilweise in dem Außengehäuse angeordnet und teilweise in dem Stellmodul angeordnet. Vorteil hierbei ist es, dass Bauraum in dem Stellmodul eingespart wird. Somit kann die komplexe Struktur bisheriger Stellmodule im Wesentlichen beibehalten werden. Weiter wird somit eine Dimensionierung des ersten Magnetelements nicht durch Strukturen der Rohrleitungen begrenzt. Hierbei sind insbesondere die Festigkeit der Bauteile und eine Wandstärke zwischen Magnetelement und einer Kanalwand der Rohrleitungen zu berücksichtigen, sodass keine Verformung der der Kanalwand durch magnetische Kräfte des Magnetfelds erfolgt. Folglich kann durch die Anordnung des ersten Magnetelements in dem Außengehäuse ein größeres Magnetelement eingesetzt werden, wodurch ein stärkeres Magnetfeld und somit eine sicherere Messung ermöglicht wird. Gleichzeitig ist das Magnetelement in einem für die Festigkeit der Bauteile unkritischem Bereich angeordnet.

In einer weiteren Ausgestaltung ist der Sensor in dem Außengehäuse angeordnet.

In dieser Ausgestaltung wird der Sensor von dem Außengehäuse gehalten. Hierdurch ist es möglich, dass der Sensor sehr einfach und direkt über elektrische Leitungen mit der Auswerteeinheit verbunden wird. Somit ist eine sichere Messleitung gewährleistet. Gleichzeitig wird erreicht, dass der Sensor in seinen Dimensionen nicht durch die Strukturen des Stellmoduls beschränkt ist und die Festigkeit der Rohrleitungen nicht beeinträchtigt. Zudem ist es vorteilhaft, dass der Sensor dauerhaft in der gleichen Position zu dem Stellmodul gehalten wird, was eine gleichbleibende Messqualität ermöglicht.

In einer weiteren Ausgestaltung der Erfindung weist das Außengehäuse ein Modulgehäuse für die Auswerteeinheit auf, das im Bereich des ersten Magnetelements angeordnet ist.

In dieser Ausgestaltung ist an dem Außengehäuse ein zusätzliches Modulgehäuse vorgesehen. Das Modulgehäuse kann einteilig mit dem Außengehäuse ausgebildet sein. Es stellt zusätzlichen Raum bereit, in dem beispielsweise die Auswerteeinheit, das erste Magnetelement und/oder die Sensoren angeordnet werden können. Besonders bevorzugt ist es, wenn das Modulgehäuse dicht verschlossen werden kann, insbesondere spritzwassergeschützt und/oder schmutzdicht. Zudem kann es vorgesehen sein, dass die Auswerteeinheit mindestens zum Teil in das Außengehäuse eingegossen ist. Ein Vorteil des Modulgehäuses ist es, dass die Auswerteeinheit und eventuell Teile der Messvorrichtung von außen zugänglich sind. Hierdurch wird ein Herstellungsprozess vereinfacht. Gleichzeitig werden Wartungsarbeiten von außen ermöglicht, beispielsweise ein Austauschen einzelner Komponenten. Zudem wird zusätzlicher Bauraum geschaffen, wodurch Einflüsse auf die Festigkeit des Stellmoduls und des Außengehäuses minimiert werden.

In einer weiteren Ausgestaltung weist das Abschaltventil ein Abschirmelement auf, das zumindest den Sensor elektromagnetisch abschirmt.

In dieser Ausgestaltung wird der Sensor durch das Abschirmelement zumindest teilweise elektromagnetisch gegenüber der Umwelt abgeschirmt. Hierdurch wird eine besonders hohe Messgenauigkeit gewährleistet, da elektromagnetische Umwelteinflüsse auf den Sensor und damit auf das Messsignal verringert oder ganz verhindert werden. Das Abschirmelement kann beispielsweise als Blechstruktur, wie ein Blechkäfig oder Blechkorb, ausgebildet sein, der den Sensor zumindest teilweise umgibt. Weiter ist es bevorzugt, wenn das Abschirmelement aus Mu-Metall besteht, wodurch eine besonders gute Abschirmung erreicht wird. Besonders bevorzugt ist es, wenn das Modulgehäuse zu einer Seite eine Öffnung aufweist und das Abschirmelement als Verschluss dieser Öffnung eingesetzt wird. Das Abschirmelement kann beispielsweise so ausgestaltet sein, dass es auf den abzuschirmenden Bereich aufgeklippt werden kann. Hierdurch können Bauteile eingespart werden, wodurch eine sehr wirtschaftliche Herstellung des Abschaltventils ermöglicht wird.

In einer weiteren Ausgestaltung weisen das Außengehäuse und das Stellmodul eine gemeinsame Verdrehsicherung zum verdrehsicheren Verbinden auf.

In dieser Ausgestaltung weisen Außengehäuse und Stellmodul Sicherungselemente auf, die bei einem Zusammenwirken eine Verdrehsicherung bilden. Dies kann beispielsweise durch einen Formschluss oder durch ein Sicherungselement, wie einem Sicherungssplint, erfolgen. Alternativ oder zusätzlich ist es denkbar, dass eine Aufnahme des Außengehäuses für das Stellmodul und das Stellmodul in etwa komplementären Formstrukturen ausgebildet sind, die bei einem Zusammenwirken die Verdrehsicherung bewirken.

Dies hat den besonderen Vorteil, dass ein einfacher Aus- und Einbau des Stellmoduls gewährleistet wird. Besonders vorteilhaft ist es, wenn sich einzelne Elemente der Messvorrichtung sowohl in dem Stellmodul als auch an dem Außengehäuse befinden. Dann ist gleichzeitig gesichert, dass die Elemente stets korrekt zueinander ausgerichtet sind. Beispielsweise kann das Magnetelement innerhalb des Stellmoduls stets korrekt zu dem Magnetelement in dem Außengehäuse ausgerichtet sein. Somit wird eine Bedienung vereinfacht und es werden Bedienungsfehlern durch einen Benutzer vorgebeugt.

In einer weiteren Ausgestaltung ist die Ausgabeeinheit ein Leuchtelement.

In dieser Ausgestaltung ist ein Leuchtelement vorgesehen, welches als Ausgabeeinheit dient. Dieses kann beispielsweise dann leuchten, wenn ein Fluidfluss erfasst wird. Es eignet sich daher insbesondere für eine Darstellung eines Ausgangssignals mit zwei Zuständen. Das Leuchtelement ist vorzugsweise als LED ausgestaltet, da diese mit sehr geringen elektrischen Energiemengen betrieben werden kann. Somit ist es möglich, dass das Leuchtelement direkt an dem Abschaltventil angeordnet wird. Eine Sichtkontrolle auf den Bereich der Abschaltventile ermöglicht somit auch bei Nacht eine sichere und einfache Überprüfung des Fluidflusses an einzelnen Abschaltventilen. Alternativ oder zusätzlich ist es denkbar, dass eine Reihe an Leuchtelementen innerhalb des Fahrerraums des Nutzfahrzeugs angeordnet ist, die dem Benutzer des Nutzfahrzeugs direkt einen vorhandenen oder nicht vorhandenen Fluidfluss für ein entsprechendes Abschaltventil anzeigen.

In einer weiteren Ausgestaltung ist die Auswerteeinheit dazu ausgebildet, das Ausgangssignal zusätzlich in Abhängigkeit eines vordefinierten Parameters zu erzeugen.

In dieser Ausgestaltung kann die Auswerteeinheit an aktuelle Gegebenheiten angepasst werden. Der Parameter, beispielsweise ein Schwellenwert, kann von dem Benutzer vordefiniert werden. Dieser ist vorzugsweise von der Art des geführten Fluides abhängig. Unterschiedliche Fluide unterscheiden sich beispielsweise durch die Anzahl geladener Teilchen und die Art der geladenen Teilchen in dem Fluid. Hieraus ergibt sich, dass für unterschiedliche Fluide unterschiedliche Messwerte durch den Sensor erfasst werden, wenn ein Fluidfluss vorliegt. Um Fehlmessungen und Fehlinterpretationen vorzubeugen, kann der Parameter dahingehend abgeändert werden, dass er an typische Werte für das aktuell verwendete Fluid angepasst wird. Das Definieren des Parameters kann beispielsweise über eine Kommunikationsleitung zu dem Abschaltventil erfolgen. Vorteil der Anpassung des Parameters ist es, das gewährleistet wird, dass nur dann ein Fluidfluss angezeigt wird, wenn dieser auch tatsächlich vorliegt. Ferner wird dadurch gewährleistet, dass überhaupt ein Fluidfluss erkannt wird.

Weiter ist es bevorzugt, wenn der Fahrer die Art des geführten Fluids über eine Eingabevorrichtung in eine Bordelektronik des Nutzfahrzeugs eingibt und dann der Parameter entsprechend des geführten Fluids automatisch in der Auswerteeinheit durch die Bordelektronik angepasst wird. Dies kann beispielsweise dadurch erfolgen, dass der Wert des Parameters über eine Datenbankabfrage anhand einer eingegebenen Fluidbezeichnung ermittelt und über einen Datenbus an die Auswerteeinheit übergeben wird.

In einer weiteren Ausgestaltung sind die Auswerteeinheit und der Sensor in dem Stellmodul angeordnet, wobei die Auswerteeinheit einen Transponder aufweist und wobei eine Leseeinheit zum Auslesen des Transponders an dem Außengehäuse angeordnet ist.

In dieser Ausgestaltung sind die Auswerteeinheit und die Messvorrichtung zumindest teilweise in dem Stellmodul angeordnet. Hieraus ergibt sich der Vorteil, dass die Messvorrichtung und die Auswerteeinheit sehr einfach durch Herausnehmen des Stellmoduls aus dem Außengehäuse gewartet oder ausgetauscht werden kann. Die Verwendung des Transponders ermöglicht eine drahtlose Signalverbindung von der Auswerteeinheit zu der Ausgabeeinheit über die Leseeinheit des Abschaltventils. Vorzugsweise sind eine Antenne des Transponders und eine Antenne der Leseeinheit als Drahtwicklungen um jeweils einen Topfkern ausgebildet. Hierdurch wird eine gute und robuste Informationsübertragung ermöglicht. Diese Antennen können zusätzlich von einem Schirmblech umgeben sein, sodass sich gerichtete Antennen ergeben, die vor externe Beeinflussung weitgehend geschützt sind.

Ein weiterer Vorteil ist es, dass die Auswerteeinheit durch die Leseeinheit mit Energie versorgt werden kann, so dass elektrische Versorgungsleitungen von dem Außengehäuse zu der Auswerteeinheit nicht notwendig sind. Zudem ist vorzugsweise ein elektrischer Energiespeicher vorgesehen, der in dem Stellmodul angeordnet ist und zumindest die Auswerteeinheit mit elektrischer Energie versorgt. Ein solcher Energiespeicher kann beispielsweise ein Kondensator sein, der ihm zugeführte elektrische Energie puffert.

Besonders bevorzugt ist es, wenn der Transponder ein RFID-Transponder und die Leseeinheit eine RFID-Leseeinheit sind. Diese Vorrichtungen haben den Vorteil, dass sie mit geringen elektrischen Versorgungsströmen auskommen. Somit wird eine flexible Struktur, die einfach wartbar ist, mit einer energiesparenden Messvorrichtung verknüpft. Weiter ist es bevorzugt, wenn der Transponder ein dynamischer Transponder ist, dessen Ausgabesignal in Abhängigkeit des Messsignals adaptiert werden kann. Alternativ ist es denkbar, dass eine Sendefähigkeit des Transponders unterbrochen wird, wenn ein Fluidfluss vorliegt oder auch nicht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Nutzfahrzeug mit einer fluidführenden Vorrichtung,
- Fig. 2: eine Ausführungsform eines erfindungsgemäßen Abschaltventils,
- Fig. 3: eine vertikale Schnittdarstellung des Abschaltventils aus Fig. 2,
- Fig. 4: eine isometrische Ansicht des Abschaltventils aus Fig. 2, wobei ein Außengehäuse und ein Stellmodul in einem horizontalen Schnitt dargestellt sind,
- Fig. 5: eine Draufsicht der Schnittdarstellung aus Fig. 4,
- Fig. 6: eine geschnittene Vorderansicht des Abschaltventils aus Fig. 2,
- Fig. 7: eine schematische Darstellung einer Messvorrichtung mit einer ersten Ausführungsform einer Auswerteeinheit, und
- Fig. 8: eine schematische Darstellung der Messvorrichtung aus Fig.7 mit einer zweiten Ausführungsform einer Auswerteeinheit.

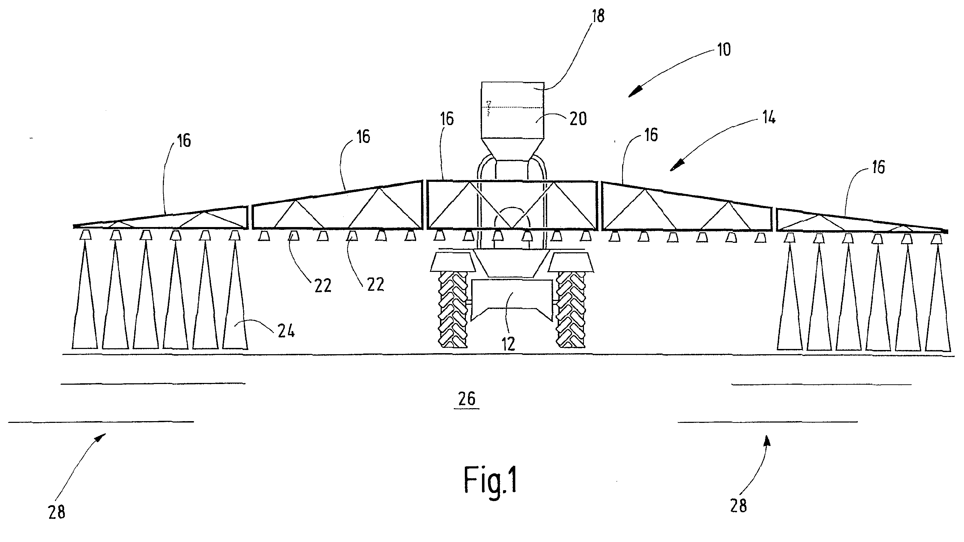

Fig. 1 zeigt ein Nutzfahrzeug in Form einer landwirtschaftlichen Spritzmaschine, das in seiner Gesamtheit mit der Bezugsziffer 30 bezeichnet ist. Das Nutzfahrzeug 10 besteht aus einer Landmaschine 12, die einen Ausleger 14 trägt. Der Ausleger 14 weist fünf Sektionen 16 auf, die schwenkbar miteinander verbunden sind. Zudem ist ein Tank 18 vorgesehen, der mit einem Fluid in Form einer Spritzflüssigkeit 20 teilweise gefüllt ist. Die Spritzflüssigkeit 20 wird über eine fluidführende Vorrichtung, die hier nicht dargestellt ist, an Spritzdüsen 22 weitergeleitet. Die Spritzdüsen 22 geben die Spritzflüssigkeit 20 in Form von Spritzstrahlen 24 an den Boden 26 ab. Wie hier dargestellt ist, geben nur einige der Spritzdüsen 22 Spritzflüssigkeit 20 in Form von Spritzstrahlen 24 ab. Hierdurch wird erreicht, dass lediglich ein Bereich 28 des Bodens 26 mit Spritzflüssigkeit 20 benetzt wird.

Somit können selektiv Teilbereiche des Bodens 26 mit Spritzflüssigkeit 20 beaufschlagt werden, wodurch Spritzflüssigkeit 20 eingespart wird. Dies kann beispielsweise dann erfolgen, wenn bekannt ist, dass ein Teil 28 des Bodens 26 bereits bespritzt worden ist. Eine Kontrolle des Fluidflusses ist somit insbesondere dann von Vorteil, wenn lediglich ein Teil der Spritzdüsen 22 eingesetzt werden soll. Einem Benutzer der landwirtschaftlichen Spritzmaschine 10 wird es ermöglicht, zu kontrollieren, ob die richtigen Spritzdüsen 22 wunschgemäß eingesetzt werden und ob diese ordnungsgemäß funktionieren.

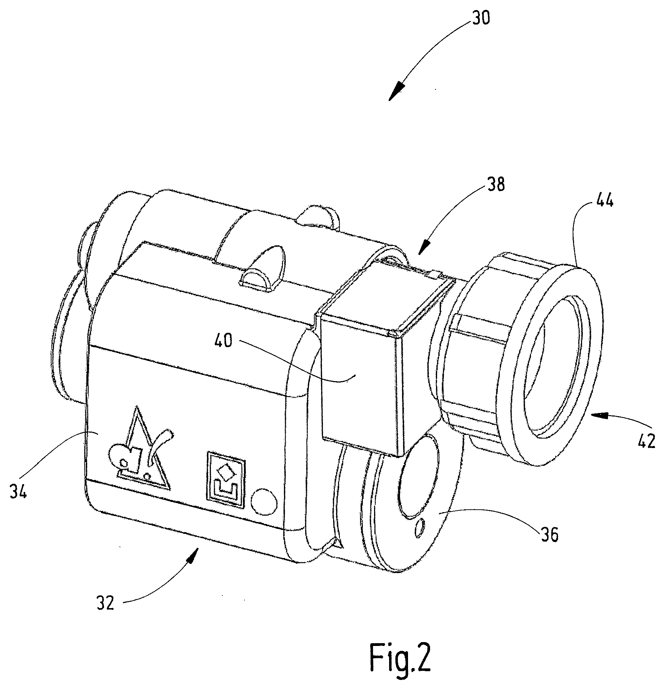

Fig. 2 zeigt ein erfindungsgemäßes Abschaltventil, das in seiner Gesamtheit mit der Bezugsziffer 30 bezeichnet ist. Das Abschaltventil 30 weist ein Außengehäuse 32 auf. Das Außengehäuse 32 besitzt ein Gehäuse 34 für eine Ventilelektronik. Zudem besitzt es ein Motorgehäuse 36. Weiter ist ein Modulgehäuse 38 vorgesehen, welches hier im Wesentlichen kubisch ausgebildet ist. Das Modulgehäuse 38 wird teilweise von einem Abschirmelement 40 umschlossen, das als gebogenes Metallblech ausgebildet ist. Es gewährleistet eine elektromagnetische Abschirmung von Komponenten innerhalb des Modulgehäuses 38 gegenüber der Umwelt des Abschaltventils 30.

Weiter weist das Abschaltventil 30 einen Anschlussbereich 42 auf. Der Anschlussbereich 42 dient dazu, das Abschaltventil 30 mit einer Versorgungs- und einer Abflussleitung fluidtechnisch zu verbinden. Die Verbindung kann mittels einer Überwurfmutter 44 gesichert werden. Die Überwurfmutter 44 weist ein Innengewinde auf, welches hier nicht dargestellt ist. Das Innengewinde der Überwurfmutter 44 kann mit einem entsprechenden Außengewinde zusammenwirken, so dass eine sichere fluidtechnische Verbindung zwischen dem Abschaltventil 30 und der fluidführenden Vorrichtung und somit mit den Spritzdüsen 22 hergestellt werden kann.

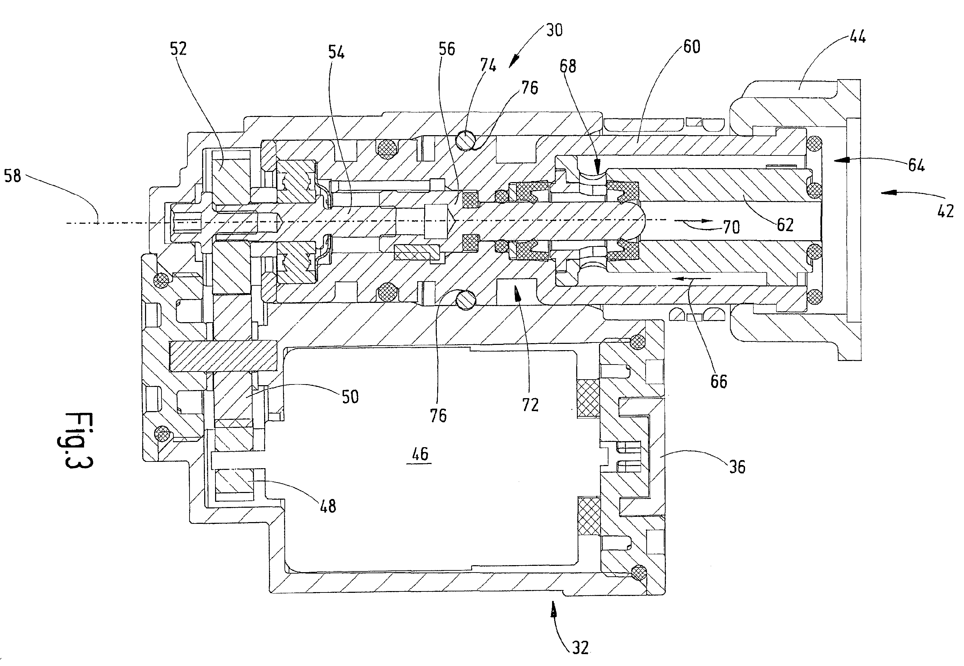

Fig. 3 zeigt eine innere Konstruktion des Abschaltventils 30. Hierbei ist das Außengehäuse 32 in einer geschnitten Seitenansicht dargestellt. Innerhalb des Motorgehäuses 36 ist ein elektrischer Motor 46 angeordnet. Der elektrische Motor 46 dient als Aktuator zum Stellen von Stellgliedern innerhalb des Abschaltventils 30. Der elektrische Motor 46 von einer hier nicht dargestellten Ventilelektronik gesteuert, die innerhalb des Gehäuses 34 angeordnet ist. Der elektrische Motor 46 wirkt mit einem Zahnrad 48 zusammen, das mit einem zweiten Zahnrad 50 und einem dritten Zahnrad 52 ein Getriebe bildet. Das Zahnrad 48 kämmt mit dem zweiten Zahnrad 50, welches das entsprechende Drehmoment an das dritte Zahnrad 52 weiterleitet. Das dritte Zahnrad 52 überträgt die Drehbewegung auf einen Gewindestift 54, welcher ein Außengewinde aufweist. Dieses Außengewinde kämmt mit einem Innengewinde eines Schließstößels 56. Der Schließstößel 56 wird durch Drehungen des Gewindestifts 54 in Richtung einer Längsachse 58 vor- oder zurückbewegt. Durch die Position des Schließstößels 56 in dem Abschaltventil 30 wird eine Unterbrechung oder eine Freigabe eines Fluidflusses innerhalb des Ventils 30 bewirkt.

Eine erste Rohrleitung 60 bildet ein Außenrohr, zu dem konzentrisch ein Innenrohr in Form einer Rohrleitung 62 angeordnet ist. Beide Rohleitungen 60 und 62 sind Kreisrohrleitungen mit der gemeinsamen Längsachse 58. Somit ergibt sich als Zuflussleitung aus der ersten Rohrleitung 60 ein Ringkanal 64, durch den ein Fluid in Richtung eines Pfeils 66 in das Abschaltventil 30 fließen kann. Ist der Schließstößel 58 in einer Position, durch die ein Durchgang 68 zwischen den Rohrleitungen geöffnet ist, dann kann das Fluid durch die erste Rohrleitung 60 über den Durchgang 68 in die zweite Rohrleitung 62 fließen. Somit kann das Fluid in Richtung eines Pfeils 70 aus dem Abschaltventil 30 ausfließen.

Die erste Rohrleitung 60 hält die zweite Rohrleitung 62, den Schließstößel 56, das Zahnrad 52 und den Gewindestift 54. Diese Komponenten bilden zusammen mit weiteren Bauelementen ein Stellmodul 72. Das Stellmodul 72 kann im gesamten in Richtung des Pfeils 70 aus dem Außengehäuse 32 entnommen werden. Zur Sicherstellung eines korrekten Sitzes des Stellmoduls 72 innerhalb des Außengehäuses 32 ist ein U-förmiges Splintelement 74 vorgesehen. Das Splintelement 74 ist durch Öffnungen des Außengehäuses 32 hindurch gesteckt und greift innerhalb des Außengehäuses 32 in Nuten 76 des Stellmoduls 72 ein. Hierdurch wird ein sicherer Sitz des Stellmoduls 72 gewährleistet. Zudem sind die Nuten 76 derart ausgebildet, dass sie zusammen mit dem Splintelement 74 eine Verdrehsicherung für das Stellmodul 72 innerhalb des Außengehäuses 32 bilden.

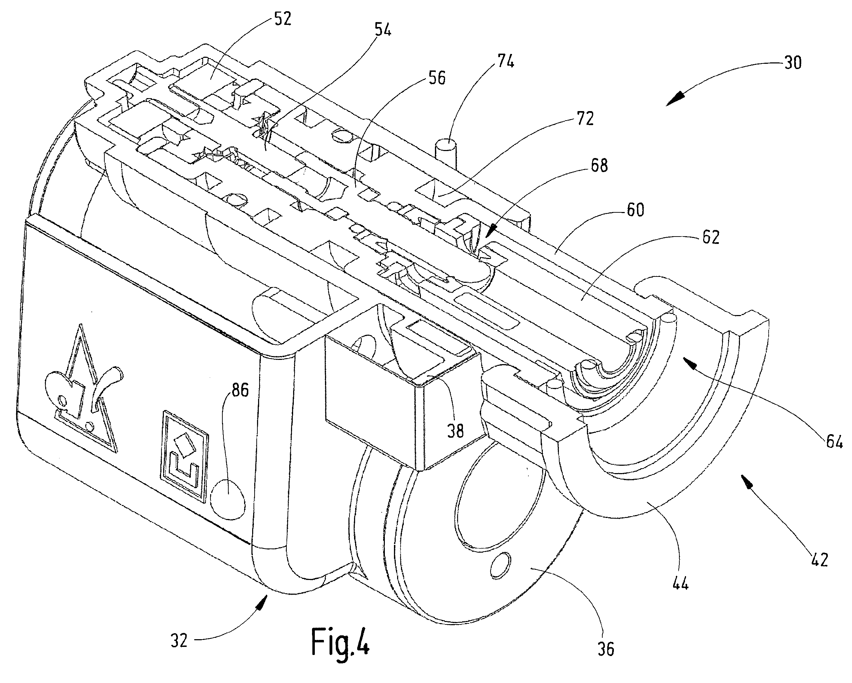

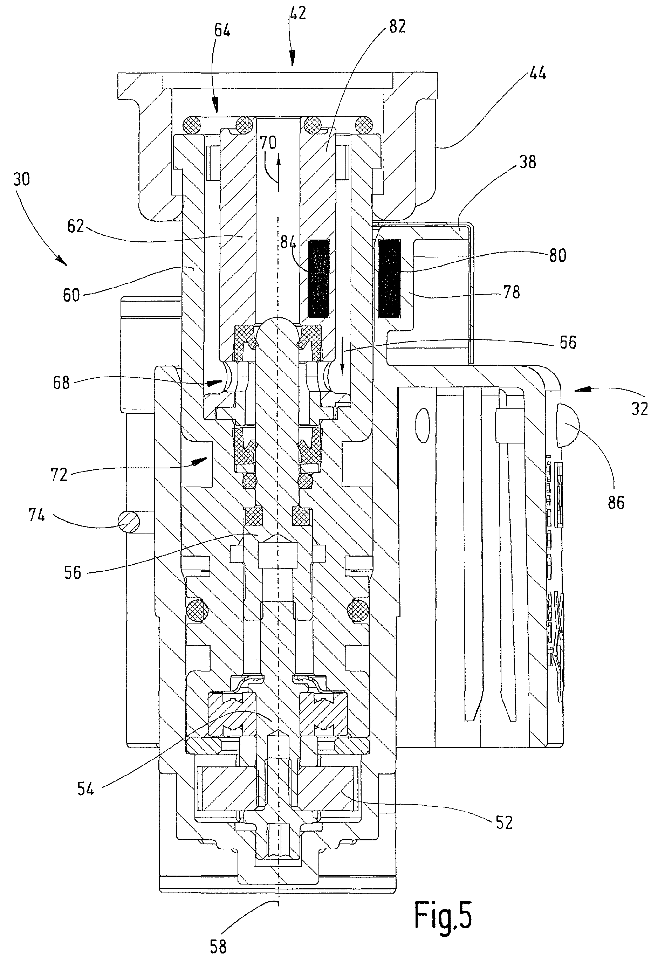

Fig. 4 und Fig. 5 zeigen eine geschnittene Draufsicht auf das Abschaltventil 30, wobei gleiche Elemente wie in den Fig. 2 bis 4 mit gleichen Bezugsziffern bezeichnet sind. Innerhalb einer Wandung 78 des Außengehäuses 32 ist ein erstes Magnetelement 80 angeordnet. Die Wandung bildet hier einen Teil des Modulgehäuses 38. Es handelt sich dabei um den Teil des Modulgehäuses 38, welcher zu dem Stellmodul 72 gerichtet ist. Entsprechend weist die zweite Rohrleitung 62 in einer Wandung 82 ein zweites Magnetelement 84 auf. Durch Anordnung des ersten Magnetelements 80 und des zweiten Magnetelements 84 in der dargestellten Weise wird es ermöglicht, dass die Magnete gemeinsam ein Magnetfeld bilden, welches sich durch einen Teil des Ringkanals 64 radial zu der Längsachse 58 der Rohrleitungen 62 und 60 erstreckt. Zudem ist eine Leuchtdiode 86 dargestellt, welche in das Außengehäuse 32 integriert ist. Die Leuchtdiode 86 dient als Ausgabeeinheit, die dann leuchtet, wenn ein Fluidfluss detektiert wird.

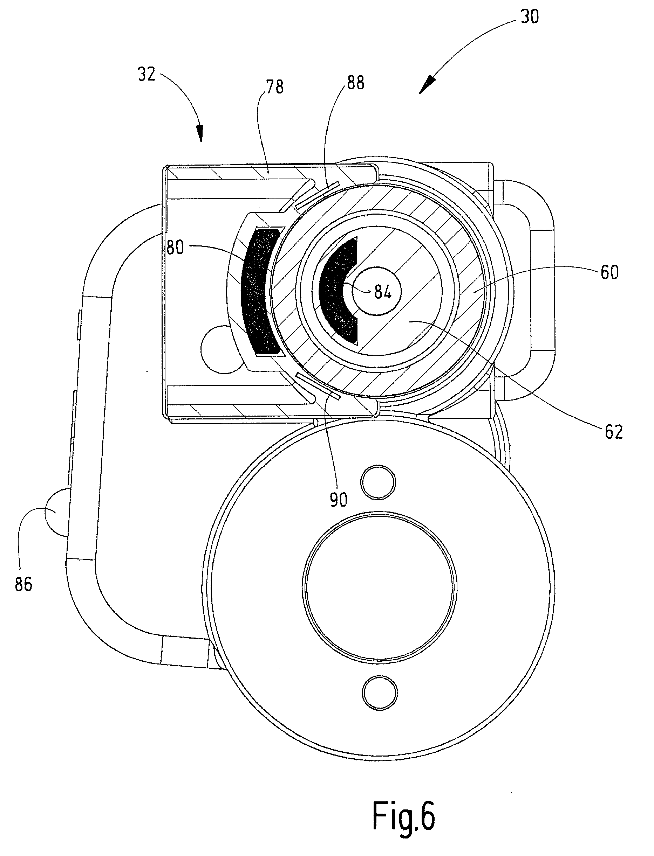

Fig. 6 zeigt das Ventil 30 in einer geschnittenen Vorderansicht. Hierbei wird deutlich, dass das erste und das zweite Magnetelement 80 und 84 jeweils einen kreisringsegmentförmigen Querschnitt aufweisen. Der jeweilige Radius der Querschnitte ergibt sich hierbei radial von der Längsachse 58 der Rohrleitungen 60 und 62. Zudem sind zwei Elektroden 88 und 90 dargestellt, welche innerhalb des Außengehäuses 32 angeordnet sind. Hierbei befinden sich die Elektroden 88 und 90 innerhalb der Wandung 78 des Außengehäuses 32. Die beiden Elektroden 88 und 90 bilden gemeinsam einen Sensor. Besonders bevorzugt ist es, wenn die Elektroden 88 und 90 einen kreisringsegmentförmigen Querschnitt aufweisen.

Eine Auswerteeinheit sowie elektrischen Leitungen von den Elektroden 88 und 90 zu der Auswerteeinheit sind in Fig. 6 aus Gründen der Übersichtlichkeit nicht dargestellt.

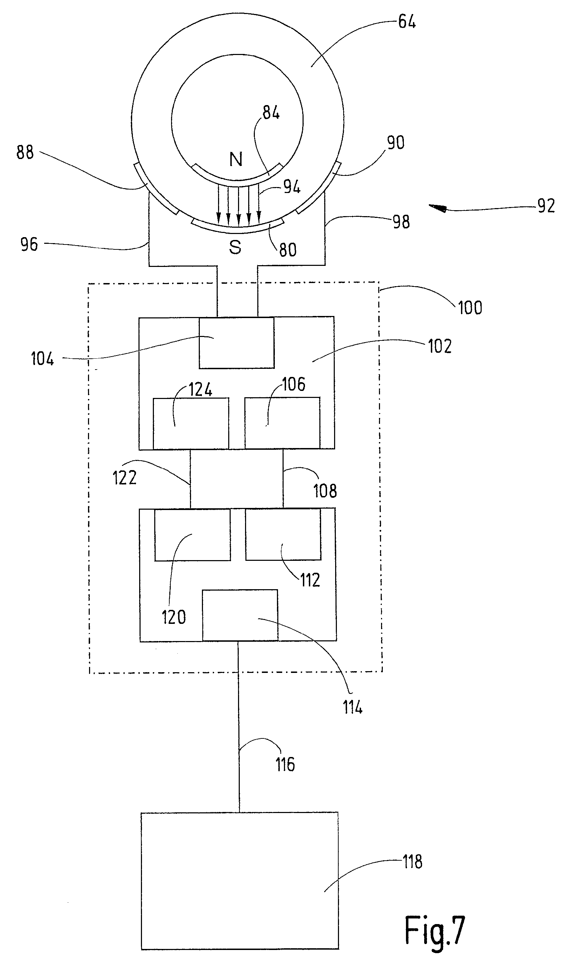

Fig. 7 zeigt eine schematische Darstellung einer Messvorrichtung die in ihrer Gesamtheit mit der Bezugsziffer 92 bezeichnet ist. Die Messvorrichtung 92 kann beispielsweise konstruktiv in der vorgenannten Form, die mit Bezug zu den Fig. 2 bis 6 beschrieben worden ist, realisiert werden.

Im Bereich des Ringkanals 64 sind das erste Magnetelement 80 und das zweite Magnetelement 84 angeordnet. Die beiden Magnetelemente 80 und 84 bilden gemeinsam ein Magnetfeld 94. Die dargestellten Magnetfeldlinien verlaufen im Wesentlichen orthogonal zu einer Flussrichtung eines Fluidflusses innerhalb des Ringkanals 64. Die Flussrichtung verläuft in der Darstellung orthogonal zu der Papierebene.

Durch das Magnetfeld 94 werden geladene oder polarisierte Teilchen innerhalb des Fluids in dem Ringkanal 64 zu den Elektroden 88 und 90 abgelenkt. Wenn ein Fluidfluss vorliegt, induzieren sie eine elektrische Spannung in die Elektroden 88 und 90, die als Messsignal über Messleitungen 96 und 98 an eine Auswerteeinheit 100 weitergeleitet wird. Diese elektrische Spannung liegt typischerweise im Mikrovolt-Bereich.

Die Auswerteeinheit 100 weist daher einen Operationsverstärker 102 auf, der über eine Schnittstelle 104 das Messsignal empfängt. Innerhalb des Operationsverstärkers 102 wird das Messsignal verstärkt und über eine weitere Schnittstelle 106 und eine Leitung 108 an einen Mikrocontroller 110 weitergeleitet. Der Mikrocontroller 110 weist hierzu eine Schnittstelle 112 auf. Innerhalb des Mikrocontrollers 110 wird das Messsignal in ein digitales Signal gewandelt. Zusätzlich wird ausgewertet, ob das Messsignal einen Wert hat, der ausreichend ist, um ein bestimmtes binäres Ausgangssignal zu erzeugen. Dies wird vorzugsweise über einen Schwellenwert bestimmt, der definiert, ab welcher Spannung des Messsignals bzw. des verstärkten Messsignals ein Ausgangssignal erzeugt wird.

Wird ein Ausgangssignal erzeugt, so erfolgt eine Ausgabe des Ausgangssignals über eine weitere Schnittstelle 114. Ausgehend von der Schnittstelle 114 wird das Ausgangssignal über eine Leitung 116 an eine Ventilelektronik 118 zur Weiterverarbeitung weitergeleitet. Die Ventilelektronik 118 versorgt zudem die Auswerteeinheit 100 über die Leitung 116 mit elektrischem Strom. Dieser wird zudem über eine Versorgungsschnittstelle 120 und eine Versorgungsleitung 122 an eine Versorgungsschnittstelle 124 des Operationsverstärkers 102 weitergeleitet.

Liegt ein Fluidfluss innerhalb des Ringkanals 64 vor, so ergibt sich eine Spannungsveränderung zwischen den Elektroden 88 und 90. Diese wird als Messsignal an den Operationsverstärker 102 geleitet, der das Messsignal verstärkt. Das verstärkte Messsignal wird dann über die Leitung 108 an den Mikrocontroller 110 gesendet. In Abhängigkeit des verstärkten Messsignals erzeugt der Mikrocontroller 110 das Ausgangssignal, das dann für eine weitere Verarbeitung beispielsweise an die Ventilelektronik 118 weitergegeben werden kann.

Ausgehend von der Ventilelektronik 118 wird dann das Ausgangssignal genutzt, um eine Ausgabeeinheit derart anzusteuern, dass dem Benutzer mitgeteilt wird, dass ein Fluidfluss vorliegt. Die Ausgabeeinheit kann beispielsweise ein Bildschirm des Nutzfahrzeugs 10 sein. Besonders bevorzugt ist es, wenn die Ventilelektronik 118 mit einem Daten-Bus verbunden ist, über den das Ausgangssignal an eine Fahrzeugelektronik weitergeleitet werden kann. Diese ermöglicht dann eine optische Darstellung des Ausgangssignals für den Benutzer. Zusätzlich ist auch die Leuchtdiode 86 eine Ausgabeinheit für eine Visualisierung des Ausgangssignals.

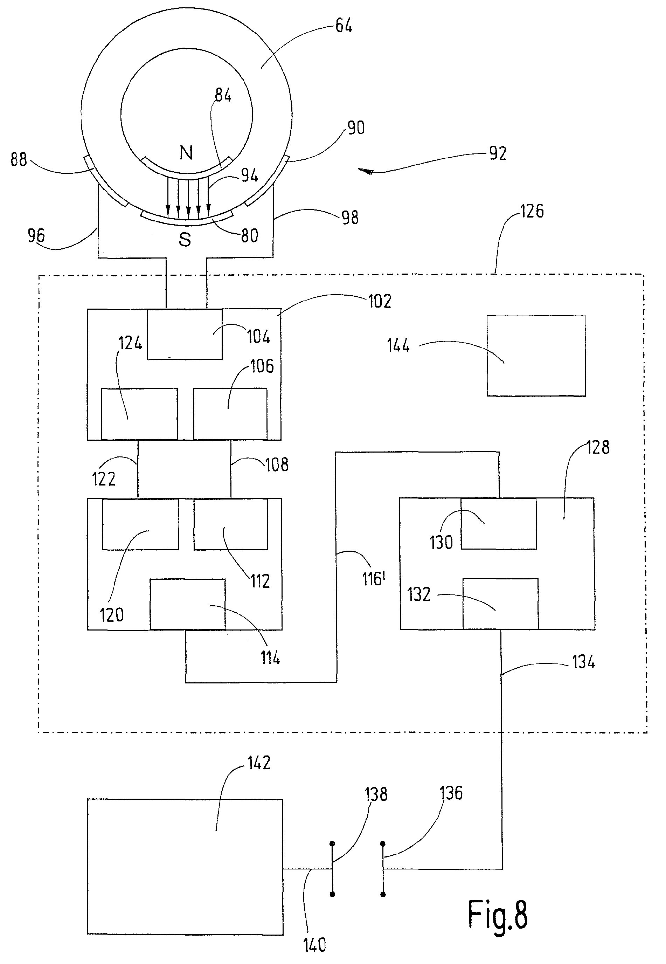

Fig. 8 zeigt die Messvorrichtung 92, zusammen mit einer zweiten Ausführungsform der Auswerteeinheit, die in ihrer Gesamtheit mit der Bezugsziffer 126 gekennzeichnet ist. Die Auswerteeinheit 126 weist Komponenten auf, die auch in der Auswerteeinheit 100 eingesetzt werden. Gleiche Komponenten sind daher mit gleichen Bezugsziffern bezeichnet. Ausgehend von der Schnittstelle 114 wird ein Signal über die Leitung 116' an einen RFID-Transponder 128 weitergeleitet. Dieser empfängt das Signal über eine Schnittstelle 130. Innerhalb des RFID-Transponders 128 wird das Signal derart gewandelt, dass es über eine Schnittstelle 132 und eine Ausgangsleitung 134 an eine Antenne 136 weitergeleitet werden kann. Die Antenne 136 wirkt mit einer Antenne 138 zusammen, welche das empfangene Signal über eine Leitung 140 an eine RFID-Leseeinheit 142 weiterleitet. Die RFID-Leseeinheit 142 kann dann in Abhängigkeit des empfangenen Signals ein Ausgangssignal an die Ventilelektronik 118 senden.

Innerhalb der Auswerteeinheit 126 ist zudem ein Energiespeicher angeordnet, beispielsweise in Form eines Kondensators, der in seiner Gesamtheit mit der Bezugsziffer 144 bezeichnet ist. Der Energiespeicher 144 wird von der RFID-Leseeinheit 142 gespeist. Dies erfolgt bei RFID-Systemen dadurch, dass über die Antenne 138 zunächst ein Versorgungssignal an die Antenne 136 ausgegeben wird. Das Versorgungssignal aktiviert und bestromt den RFID-Transponder 128. Der Energiespeicher 144 speichert die so empfangene elektrische Energie und gibt diese sowohl an den RFID-Transponder 128 als auch an den Mikrocontroller 110 und den Operationsverstärker 102 ab. Dies erfolgt über elektrische Leitungen, die aus Gründen der Übersichtlichkeit hier nicht dargestellt sind. Der Mikrocontroller 110 übernimmt in dieser Ausführungsform zusätzlich ein Energiemanagement für die Komponenten der Auswerteeinheit 126.

Die RFID-Leseeinheit 142 liest den RFID-Transponder 128 dann aus, wenn ein Öffnungs- oder ein Schließbefehl der Bordelektronik des Nutzfahrzeugs 10 von dem Abschaltventil 30 empfangen wird. Alternativ ist es denkbar, dass der Transponder zeitlich gesteuert oder intermittierend ausgelesen wird.

In bevorzugten Ausführungsformen ist es vorgesehen, dass die Auswerteeinheit 126 und die Antenne 136 mit in dem Stellmodul 72 integriert sind. Somit besteht die Möglichkeit, das Stellmodul 72 aus dem Außengehäuse 32 herauszunehmen, ohne dass elektrische Leitungen aufwändig getrennt werden müssen.

## Patentansprüche

1. Abschaltventil (30) für eine fluidführende Vorrichtung eines Nutzfahrzeugs (10) zur Unterbrechung und/oder Freigabe eines Fluidflusses eines Fluids (20) zwischen einer Versorgungsleitung und einer Spritzdüse (22), mit einer Messvorrichtung (92) zum Erfassen des Fluidflusses, wobei die Messvorrichtung (92) mindestens ein erstes Magnetelement (80) und ein zweites Magnetelement (84) zum Erzeugen eines gemeinsamen Magnetfelds (94) aufweist, wobei die Magnetelemente (80, 84) derart angeordnet sind, dass das Fluid (20) zumindest teilweise durch das Magnetfeld (94) fließen kann, und wobei die Messvorrichtung (92, 126) mindestens einen Sensor (88, 90) aufweist, der eine Ladungsverschiebung geladener Teilchen in dem Fluid (20) erfassen und der ein Messsignal in Abhängigkeit der Ladungsverschiebung ausgeben kann, **gekennzeichnet durch** eine Zuflussleitung (60), die als eine erste Rohrleitung (60) ausgebildet ist, und
eine Abflussleitung (62), die als eine zweite Rohrleitung (62) ausgebildet ist, wobei die erste und die zweite Rohrleitung (60, 62) konzentrisch zueinander angeordnet sind und wobei mindestens eines der Magnetelemente (80, 84) an einer der Rohrleitungen (60, 62) angeordnet ist.

2. Abschaltventil (30) nach Anspruch 1, **gekennzeichnet durch** eine Auswerteeinheit (100, 126), die mit dem Sensor (88, 90) signaltechnisch verbunden ist und die dazu ausgebildet ist, das Messsignal zu erfassen, ein Ausgangssignal in Abhängigkeit des Messsignals zu erzeugen und das Ausgangssignal an eine Ausgabeeinheit (86) auszugeben

3. Abschaltventil (30) nach Anspruch 1, **dadurch gekennzeichnet, dass** mindestens eines der Magnetelemente (80, 84) zumindest teilweise innerhalb einer Wandung (78) einer der Rohrleitungen (62) angeordnet ist.

4. Abschaltventil (30) nach einem der Ansprüche 1 oder 3, **dadurch gekennzeichnet, dass** mindestens eines der Magnetelemente (80, 84) einen kreisringsegmentförmigen Querschnitt aufweist.

5. Abschaltventil (30) nach einem der Ansprüche 1 bis 4, **dadurch gekennzeichnet, dass** die Rohrleitungen (60, 62) über einen Schließstößel (58) fluidtechnisch miteinander verbunden sind, wobei der Schließstößel (58) die Unterbrechung und/oder die Freigabe des Fluidflusses bewirken kann.

6. Abschaltventil (30) nach einem der Ansprüche 1 bis 5, **gekennzeichnet durch** ein Außengehäuse (32) und ein Stellmodul (72), wobei das Stellmodul (72) die Rohrleitungen (60, 62) aufweist und lösbar mit dem Außengehäuse (32) verbunden ist.

7. Abschaltventil (30) nach Anspruch 6, **dadurch gekennzeichnet, dass** das erste Magnetelement (80) in dem Außengehäuse (32) angeordnet ist.

8. Abschaltventil (30) nach einem der Ansprüche 6 oder 7, **dadurch gekennzeichnet, dass** der Sensor (88, 90) in dem Außengehäuse (32) angeordnet ist.

9. Abschaltventil (30) nach einem der Ansprüche 6 bis 8, **dadurch gekennzeichnet, dass** das Außengehäuse (32) ein Modulgehäuse (38) für die Auswerteeinheit (100, 126) aufweist, das im Bereich des ersten Magnetelements (80) angeordnet ist.

10. Abschaltventil (30) nach einem der Ansprüche 1 bis 9, **gekennzeichnet durch** ein Abschirmelement (40), das zumindest den Sensor (88, 90) elektromagnetisch abschirmt.

11. Abschaltventil (30) nach einem der Ansprüche 6 bis 9, **dadurch gekennzeichnet, dass** das Außengehäuse (32) und das Stellmodul (72) eine Verdrehsicherung (74, 76) zum verdrehsicheren Verbinden aufweisen.

12. Abschaltventil (30) nach Anspruch 2, **dadurch gekennzeichnet, dass** die Ausgabeeinheit (86) ein Leuchtelement (86) ist.

13. Abschaltventil (30) nach Anspruch 2, **dadurch gekennzeichnet, dass** die Auswerteeinheit (100, 126) dazu ausgebildet ist, das Ausgangssignal zusätzlich in Abhängigkeit eines vorgegebenen Parameters zu erzeugen.

14. Abschaltventil (30) nach den Ansprüchen 2 und 6, **dadurch gekennzeichnet, dass** die Auswerteeinheit (100, 126) und der Sensor (88, 90) in dem Stellmodul (72) angeordnet sind, wobei die Auswerteeinheit (100, 126) einen Transponder (128) aufweist, und wobei eine Leseeinheit (142) zum Auslesen des Transponders (128) an dem Außengehäuse (32) angeordnet ist.

## Claims

1. Shut-off valve (30) for a fluid-conducting system of a utility vehicle (10) for interrupting and/or releasing a flow of fluid (20) between a supply line and a spray nozzle (22), having a measuring device (92) for detecting the flow of fluid, wherein the measuring device (92) has at least a first magnetic element (80) and a second magnetic element (84) for generating a common magnetic field (94), wherein the magnetic elements (80, 84) are arranged in such a way that the fluid (20) can at least partially flow through the magnetic field (94), and wherein the measuring device (92, 126) has at least one sensor (88, 90) which can detect a charge displacement of charged particles in the fluid (20) and which can output a measurement signal as a function of the charge displacement, **characterized by** an inflow line (60) which is embodied as a first pipeline (60), and
an outflow line (62) which is embodied as a second pipeline (62) wherein the first and second pipelines (60, 62) are arranged concentrically with respect to one another, and wherein at least one of the magnetic elements (80, 84) is arranged on one of the pipelines (60, 62).

2. Shut-off valve (30) according to Claim 1, **characterized by** an evaluation unit (100, 126) which is connected by signalling equipment with the sensor (88, 90) and which is designed to detect the measurement signal, to generate an output signal as a function of the measurement signal and to output the output signal to an output unit (86).

3. Shut-off valve (30) according to Claim 1, **characterized in that** at least one of the magnetic elements (80, 84) is arranged at least partially within the wall (78) of one of the pipelines (62).

4. Shut-off valve (30) according to one of Claims 1 or 3, **characterized in that** at least one of the magnet elements (80, 84) has a circular-ring-segment-shaped cross section.

5. Shut-off valve (30) according to one of Claims 1 to 4, **characterized in that** the pipelines (60, 62) are connected fluidically to one another via a closing plunger (58), wherein the closing plunger (58) can interrupt and/or release the flow of fluid.

6. Shut-off valve (30) according to one of Claims 1 to 5, **characterized by** an external housing (32) and an actuation module (72), wherein the actuation module (72) has the pipelines (60, 62) and is detachably connected to the external housing (32).

7. Shut-off valve (30) according to Claim 6, **characterized in that** the first magnet element (80) is arranged in the external housing (32).

8. Shut-off valve (30) according to one of Claims 6 or 7, **characterized in that** the sensor (88, 90) is arranged in the external housing (32).

9. Shut-off valve (30) according to one of Claims 6 to 8, **characterized in that** the external housing (32) has a module housing (38) for the evaluation unit (100, 126) which is arranged in the region of the first magnet element (80).

10. Shut-off valve (30) according to one of Claims 1 to 9, **characterized by** a screen element (40) which screens at least a sensor (88, 90) electro-magnetically.

11. Shut-off valve (30) according to one of Claims 6 to 9, **characterized in that** the external housing (32) and the actuation module (72) have an anti-rotation means (74, 76) for connecting in a rotationally locked fashion.

12. Shut-off valve (30) according to Claim 2, **characterized in that** the output unit (86) is a lighting element (86).

13. Shut-off valve (30) according to Claim 2, **characterized in that** the evaluation unit (100, 126) is designed to generate the output signal additionally as a function of a predefined parameter.

14. Shut-off valve (30) according to Claims 2 and 6, **characterized in that** the evaluation unit (100, 126) and the sensor (88, 90) are arranged in the actuation module (72), wherein the evaluation unit (100, 126) has a transponder (128), and wherein a reading unit (142) for reading the transponder (128) is arranged on the external housing (32).

## Revendications

1. Soupape d'arrêt (30) pour un dispositif conducteur de fluide d'un véhicule utilitaire (10), destinée à interrompre et/ou à libérer un flux de fluide d'un fluide (20) entre un conduit d'alimentation et un gicleur (22), avec un dispositif de mesure (92) destiné à détecter le flux de fluide, le dispositif de mesure (92) comportant au moins un premier élément magnétique (80) et un deuxième élément magnétique (84) destinés à générer un champ magnétique (94) commun, les éléments magnétiques (80, 84) étant placés de telle sorte que le fluide (20) puisse s'écouler au moins en partie à travers le champ magnétique (94) et le dispositif de mesure (92, 126) comportant au moins un capteur (88, 90) qui peut détecter un déplacement de la charge de particules chargées dans le fluide (20) et qui peut délivrer un signal de mesure en fonction du déplacement de la charge, **caractérisée par** un conduit d'alimentation (60) qui est conçu en tant que première canalisation (60) et
un conduit d'évacuation (62) qui est conçu en tant que deuxième canalisation (62), la première et la deuxième canalisation (60, 62) étant placées de manière concentrique l'une par rapport à l'autre et au moins l'un de éléments magnétiques (80, 84) étant placé sur l'une des canalisations (60, 62).

2. Soupape d'arrêt (30) selon la revendication 1, **caractérisée par** une unité d'évaluation (100, 126) qui est reliée par technique signalétique avec le capteur (88, 90) et qui est conçue pour détecter le signal de mesure, pour générer un signal de sortie en fonction du signal de mesure et pour délivrer le signal de sortie à une unité de sortie (86).

3. Soupape d'arrêt (30) selon la revendication 1, **caractérisée en ce qu'**au moins l'un des éléments magnétiques (80, 84) est placé au moins en partie à l'intérieur d'une paroi (78) de l'une des canalisations (62).

4. Soupape d'arrêt (30) selon l'une quelconque des revendications 1 ou 3, **caractérisée en ce qu'**au moins l'un des éléments magnétiques (80, 84) présente une section transversale en forme de segment d'anneau de cercle.

5. Soupape d'arrêt (30) selon l'une quelconque des revendications 1 à 4, **caractérisée en ce que** les canalisations (60, 62) sont reliées l'une à l'autre par technique fluidique par l'intermédiaire d'un coulisseau de fermeture (58), le coulisseau de fermeture (58) étant susceptible de provoquer l'interruption et/ou la libération du flux de fluide.

6. Soupape d'arrêt (30) selon l'une quelconque des revendications 1 à 5, **caractérisée par** un corps extérieur (32) et un module de réglage (72), le module de réglage (72) comportant les canalisations (60, 62) et étant relié de manière amovible avec le corps extérieur (32).

7. Soupape d'arrêt (30) selon la revendication 6, **caractérisée en ce que** le premier élément magnétique (80) est placé dans le corps extérieur (32).

8. Soupape d'arrêt (30) selon l'une quelconque des revendications 6 ou 7, **caractérisée en ce que** le capteur (88, 90) est placé dans le corps extérieur (32).

9. Soupape d'arrêt (30) selon l'une quelconque des revendications 6 à 8, **caractérisée en ce que** le corps extérieur (32) comporte un boîtier modulaire (38) pour l'unité d'évaluation (100, 126), qui est placé dans la région du premier élément magnétique (80).

10. Soupape d'arrêt (30) selon l'une quelconque des revendications 1 à 9, **caractérisée par** un élément de blindage (40) qui assure le blindage électromagnétique au moins du capteur (88, 90).

11. Soupape d'arrêt (30) selon l'une quelconque des revendications 6 à 9, **caractérisée en ce que** le corps extérieur (32) et le module de réglage (72) comportent un blocage anti-rotation (74, 76), pour une liaison anti-rotative.

12. Soupape d'arrêt (30) selon la revendication 2, **caractérisée en ce que** l'unité de sortie (86) est un élément lumineux (86).

13. Soupape d'arrêt (30) selon la revendication 2, **caractérisée en ce que** l'unité d'évaluation (100, 126) est conçue pour générer le signal de sortie en outre en fonction d'un paramètre prédéfini.

14. Soupape d'arrêt (30) selon les revendications 2 et 6, **caractérisée en ce que** l'unité d'évaluation (100, 126) et le capteur (88, 90) sont placés dans le module de réglage (72), l'unité d'évaluation (100, 126) comportant un transpondeur (128) et une unité de lecture (142) destinée à lire le transpondeur (128) étant placée sur le corps extérieur (32).
